Europäisches Patentamt

(19) European Patent Office

Office européen des brevets

(11) Veröffentlichungsnummer: **0 098 952**
**B1**

(12) **EUROPÄISCHE PATENTSCHRIFT**

(45) Veröffentlichungstag der Patentschrift:
16.09.87

(51) Int. Cl.⁴: **B 60 N 1/06**

(21) Anmeldenummer: **83105347.5**

(22) Anmeldetag: **31.05.83**

(54) Gelenkbeschlag für Kraftfahrzeugsitze mit verstellbarer Lehne.

(30) Priorität: **16.07.82 DE 3226714**

(43) Veröffentlichungstag der Anmeldung:
**25.01.84 Patentblatt 84/4**

(45) Bekanntmachung des Hinweises auf die Patenterteilung:
**16.09.87 Patentblatt 87/38**

(84) Benannte Vertragsstaaten:
**BE FR GB IT NL SE**

(56) Entgegenhaltungen:
**DE - A - 2 028 723**
**FR - A - 1 575 231**
**FR - A - 2 398 637**
**FR - A - 2 398 638**
**US - A - 1 770 035**
**US - A - 3 673 891**

(73) Patentinhaber: **P.A. Rentrop, Hubbert & Wagner Fahrzeugausstattungen GmbH & Co. KG, Nordsehler Strasse 38, D-3060 Stadthagen (DE)**

(72) Erfinder: **Wahlmann, Ernst, Volksdorf 43, D-3061 Meerbeck (DE)**

(74) Vertreter: **Patentanwälte Dipl.-Ing. Bodo Thielking Dipl.-Ing. Otto Elbertzhagen, Gadderbaumer Strasse 20, D-4800 Bielefeld 1 (DE)**

**Beschreibung**

Die Erfindung betrifft einen Gelenkbeschlag für Sitze mit verstellbarer Lehne, insbesondere Kraftfahrzeugsitze, bei dem ein dem Sitz zugeordneter fester Gelenkteil und ein der Lehne zugeordneter schwenkbarer Gelenkteil über eine Schwenkachse mit Exzenter miteinander verbunden sind, wobei ein erstes von den Gelenkteilen eine Innenverzahnung aufweist, an der eine einen Teil eines Taumelgetriebes bildende Aussenverzahnung des zweiten Gelenkteils abläuft.

Bei einem bekannten, im Oberbegriff des Anspruchs 1 definierten Gelenkbeschlag dieser Art (DE-A-1 680 128) hat es sich als nachteilig erwiesen, dass die Wandstärken der Gelenkteile grösser gewählt werden müssen als dies aus Festigkeitsgründen eigentlich erforderlich ist, um eine ausreichend grosse Breite der Zähne zu erzielen.

Zur Reduzierung der Wandstärken der Gelenkteile und der damit verbundenen, die Zahnbereiche bildenden Ausdrückungen ist es ferner auch bereits bekannt, dass die Innenseiten der Ausdrückungen in einer Ebene mit den Aussenseiten der zugehörigen Gelenkteile angeordnet sind, wobei die Wandbrücken zwischen den Ausdrückungen und den Gelenkteilen aus Werkstoffzonen bestehen, die die Zahnlücken des Innenzahnkranzes und des Aussenzahnkranzes in radialer Richtung und in Umfangsrichtung umfassen. Auch bei dieser bekannten Lösung ist für die Wahl der Dicke der Gelenkteile in erster Linie die erforderliche Breite der Zahnbereiche massgebend. Die Breite der Zahnbereiche entspricht bei dieser Konstruktion der Dicke des Ausgangsmaterials.

Es ist ferner bekannt (FR-A-2 398 637), das zweite Gelenkteil aus zwei parallelen Laschen aufzubauen, die einen Abstand voneinander aufweisen. Die beiden Laschen weisen fluchtende Bohrungen auf, in denen die Lagerzapfen des Exzenters ablaufen, der zwischen den beiden Laschen angeordnet ist. Auf dem Exzenter sitzen zwei nebeneinander angeordnete Zahnräder, welche zum Ablauf an den Innenverzahnungen der Laschen ausgebildet sind. Diese bekannte Konstruktion ist besonders aufwendig. Sie besitzt eine Vielzahl von Einzelteilen und wegen der doppelt vorgesehenen Laschen sowie der doppelt vorgesehenen Zahnräder ein besonders hohes Gewicht.

Ausgehend von dem eingangs zitierten Stand der Technik liegt der Erfindung die Aufgabe zugrunde, eine Vorrichtung der eingangs erwähnten Art so auszubilden, dass eine grössere Zahnbreite erreichbar ist als sie der Dicke des Ausgangsmaterials entspricht.

Die Lösung dieser Aufgabe erfolgt dadurch, dass konzentrisch zur Innenverzahnung des ersten Gelenkteils eine zweite im Durchmesser kleinere, in Achsrichtung versetzte Innenverzahnung vorgesehen ist, die mit einer konzentrisch zur Aussenverzahnung angeordneten, ebenfalls im Durchmesser kleineren, in die gleiche Achsrichtung versetzten zweiten Aussenverzahnung des zweiten Gelenkteils im Eingriff steht, wobei die Teilungswinkel der beiden Verzahnungen eines jeden Gelenkteils jeweils gleich sind.

Bei einer derartigen Verzahnung kann die Dicke des Ausgangsmaterials wesentlich reduziert werden gegenüber den bekannten Konstruktionen. Durch die Staffelung der Verzahnung entstehen ausreichend breite wirksame Zahnbereiche.

Gemäss einem weiteren Merkmal der Erfindung ist die zweite Aussenverzahnung mit der ersten Aussenverzahnung verdrehbar verbunden. Eine solche Konstruktion erlaubt es, die beiden Verzahnungen praktisch spielfrei anzuordnen. Hierzu genügt es, die eine Aussenverzahnung gegenüber der anderen Aussenverzahnung geringfügig verdreht anzuordnen.

Dabei hat es sich als zweckmässig erwiesen, dass die zweite Aussenverzahnung auf einem konzentrischen Ansatz im Zentrum der ersten Aussenverzahnung gelagert ist.

Gemäss einem weiteren Merkmal der Erfindung ist der Verdrehwinkel zwischen der ersten Aussenverzahnung und der zweiten Aussenverzahnung über Anschläge begrenzt.

Vorzugsweise sind die Anschläge der zweiten Aussenverzahnung von einer bogenförmigen Nut gebildet und als damit zusammenwirkender Anschlag der ersten Aussenverzahnung am zweiten Gelenkteil ein Zapfen vorgesehen, der die Nut der zweiten Aussenverzahnung durchsetzt.

Schliesslich wird noch vorgeschlagen, dass zwischen den zusammenwirkenden Anschlägen der beiden Aussenverzahnungen elastische Elemente vorgesehen sind. Diese elastischen Elemente erlauben das Aufbringen einer in Drehrichtung wirkenden Vorspannung.

Bei dem erfindungsgemässen Gelenkbeschlag ist das Problem einer ausreichenden Bemessung der Verzahnung bei vergleichsweise dünnem Ausgangsmaterial in äusserst einfacher Weise gelöst. Die gestaffelte Verzahnung kann, ebenso wie die bekannte einfache Verzahnung, im Feinschnittverfahren erzeugt werden.

Nachstehend werden zwei bevorzugte Ausführungsformen der Erfindung anhand der Zeichnung im einzelnen beschrieben.

Es zeigen:

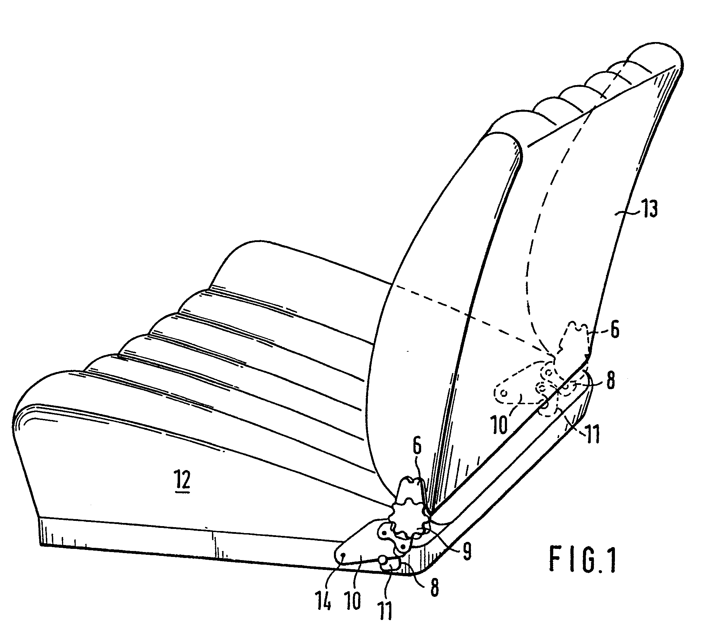

Figur 1 – einen Fahrzeugsitz mit dem Gelenkbeschlag,

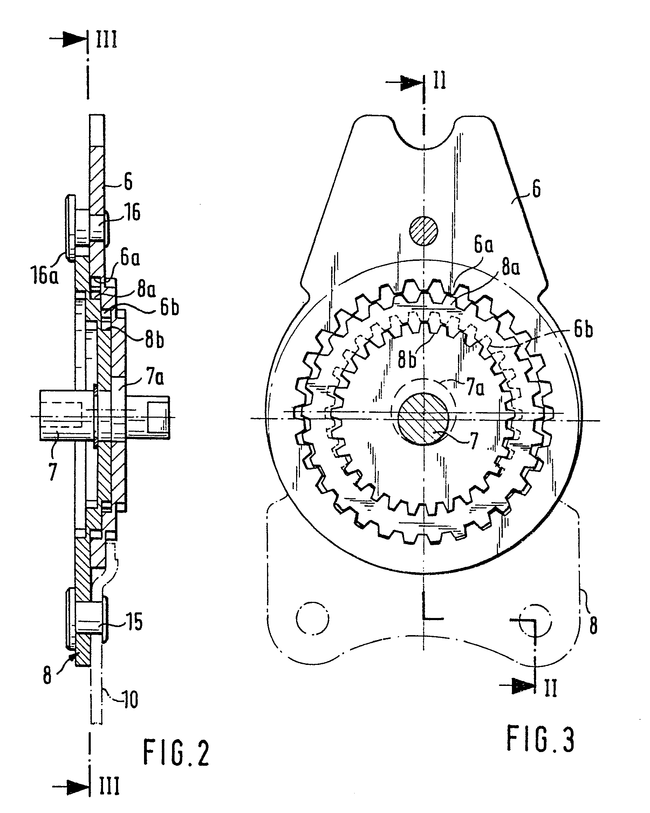

Figur 2 – einen Längsschnitt durch den Gelenkbeschlag gemäss Ebene II–II in Figur 3,

Figur 3 – einen Schnitt durch den Gelenkbeschlag gemäss Ebene III–III in Figur 2,

Figur 4 – einen Längsschnitt entlang Ebene IV–IV gemäss Figur 5 durch das zweite Gelenkteil,

Figur 5 – eine Ansicht auf das zweite Gelenkteil in Richtung des Pfeils V,

Figur 6 – einen Schnitt entlang Ebene VI–VI durch das erste Gelenkteil gemäss Figur 7,

Figur 7 – eine Ansicht in Richtung des Pfeils VII gemäss Figur 6,

Figur 8 – eine zu Figur 7 analoge Ansicht einer zweiten Ausführungsform des ersten Gelenkteils,

Figur 9 – einen Schnitt entlang Ebene IX–IX in Figur 8.

An einem Fahrzeugsitz 12 ist eine Rückenlehne 13 angelenkt. Ein erstes Gelenkteil 6 ist an der Rückenlehne befestigt und ein zweites Gelenkteil 8 ist fest mit dem Fahrzeugsitz 12 verbunden. Das zweite Gelenkteil 8 ist an einem Beschlagteil 10 befestigt, der zum Vorklappen der Rückenlehne um die Schwenkachse 4 verschwenkbar ist. Die Verriegelung der Rückenlehne erfolgt mit Hilfe einer Klinke 11.

Ein Handrad 9 ist fest mit einer Schwenkachse 7 verbunden, die drehbar in einer zentralen Bohrung 8h des zweiten Gelenkteils 8 gelagert ist. Die Schwenkachse 7 besitzt einen exzentrischen Bereich 7a, der in einer zentralen Bohrung 6c des ersten Gelenkteils 6 vorgesehen ist.

Im ersten Gelenkteil 6 sind zwei konzentrische Innenverzahnungen 6a und 6b vorgesehen. Diese beiden Innenverzahnungen stehen im Eingriff mit zwei Aussenverzahnungen 8a und 8b des zweiten Gelenkteils 8.

Die Kopfkreise der Aussenverzahnungen sind um mindestens eine Zahnhöhe kleiner als die Fusskreise der zugehörigen Innenverzahnungen. Die Exzentrizität des exzentrischen Bereichs 7a entspricht etwa der Differenz zwischen dem Fusskreis der Innenverzahnungen 6a und 6b mit den Kopfkreisen der Aussenverzahnungen 8a und 8b. Diese Differenz ist derart bemessen, dass eine Selbsthemmung zwischen den Innenverzahnungen und den Aussenverzahnungen gewährleistet ist.

Das Beschlagteil 10 ist mit dem zweiten Gelenkteil 8 über zwei Nieten 15 verbunden.

Ein Niet 16 ist ferner mit dem ersten Gelenkteil 6 fest verbunden und übergreift mit einem Kopf 16a den abgerundeten Bereich des zweiten Gelenkteils 8. Der Kopf 16a erlaubt ein Verdrehen des zweiten Gelenkteils 8 und hält die beiden Gelenkteile in Anlage aneinander.

Bei einem Verdrehen des Handrads 9 erfolgt ein Verschwenken der Schwenkachse 7 mit dem exzentrischen Bereich 7a. Es laufen dann die beiden Aussenverzahnungen 8a und 8b an den zugehörigen Innenverzahnungen 6a und 6b ab.

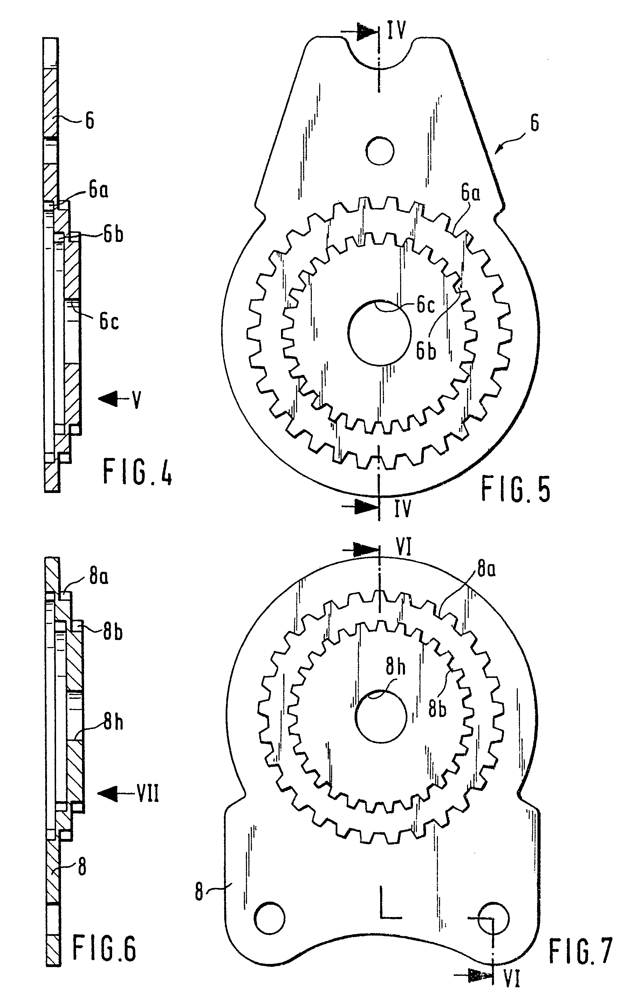

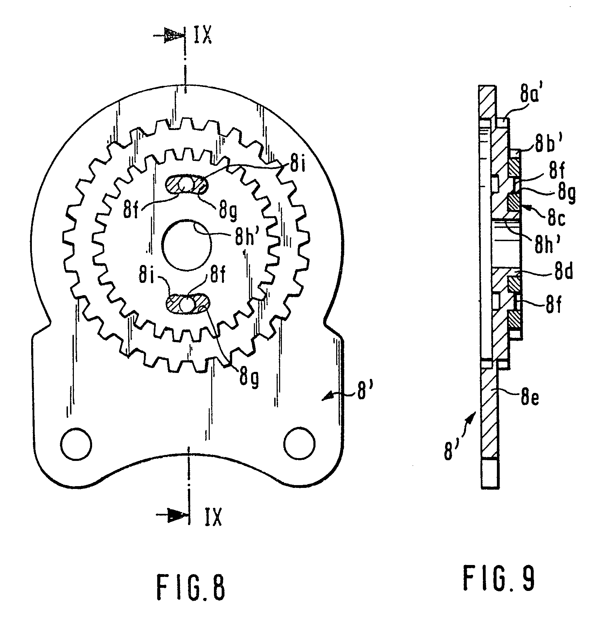

Die Ausführungsform gemäss Figuren 8 und 9 entspricht in ihrem grundsätzlichen Aufbau der Ausführungsform des ersten Gelenkteils, welches in den Figuren 7 und 6 dargestellt ist. Einander entsprechende Bestandteile sind bei der Ausführungsform gemäss Figuren 8 und 9 mit den gleichen Bezugszeichen wie in Figuren 7 und 6, jedoch mit Hochstrich, bezeichnet.

Das zweite Gelenkteil 8′ besitzt einen festen Bereich 8e, aus dem eine erste Aussenverzahnung 8a′ herausgedrückt ist. Im Zentrum besitzt das zweite Gelenkteil 8′ eine zentrale Bohrung 8h′, welche von einem Bund 8d umgeben ist. Auf dem Bund 8d ist ein Zahnrad 8c verdrehbar gelagert, welches die zweite Aussenverzahnung 8b′ aufweist. Das Zahnrad 8c weist zwei einander gegenüberliegende bogenförmige Nuten 8g auf, die von Zapfen 8f des festen Bereichs 8e des zweiten Gelenkteils 8′ durchsetzt werden. Der neben den Zapfen verbleibende Raum innerhalb der Nuten ist mit einem elastischen Material 8i ausgefüllt.

Die lose Lagerung des Zahnrads 8c auf dem festen Bereich 8e erlaubt einen Winkelversatz der zweiten Aussenverzahnung 8b′, gegenüber der ersten Aussenverzahnung 8a′ und damit den Ausgleich eines möglichen Zahnspiels.

**Patentansprüche**

1. Gelenkbeschlag für Sitze mit verstellbarer Lehne, insbesondere Kraftfahrzeugsitze, bei dem ein dem Sitz (12) zugeordneter fester Gelenkteil (8) und ein der Lehne zugeordneter schwenkbarer Gelenkteil (6) über eine Schwenkachse (7) mit Exzenter (7a) miteinander verbunden sind, wobei ein erstes (6) von den Gelenkteilen (6, 8) eine Innenverzahnung (6a) aufweist, an der eine einen Teil eines Taumelgetriebes bildende Aussenverzahnung (8a) des zweiten Gelenkteils (8) abläuft, dadurch gekennzeichnet, dass konzentrisch zur Innenverzahnung (6a) des ersten Gelenkteils (6) eine zweite im Durchmesser kleinere, in Achsrichtung versetzte Innenverzahnung (6b) vorgesehen ist, die mit einer konzentrisch zur Aussenverzahnung (8a) angeordneten, ebenfalls im Durchmesser kleineren, in die gleiche Achsrichtung versetzten zweiten Aussenverzahnung (8b) des zweiten Gelenkteils (8) im Eingriff steht, wobei die Teilungswinkel der beiden Verzahnungen (8a; 8b; 6a; 6b) eines jeden Gelenkteils (8; 8′; 6) jeweils gleich sind.

2. Gelenkbeschlag nach Anspruch 1, dadurch gekennzeichnet, dass die zweite Aussenverzahnung (8b′) mit der ersten Aussenverzahnung (8a′) verdrehbar verbunden ist.

3. Gelenkbeschlag nach Anspruch 1 und 2, dadurch gekennzeichnet, dass die zweite Aussenverzahnung (8b′) auf einem konzentrischen Ansatz (8d) im Zentrum der ersten Aussenverzahnung (8) gelagert ist.

4. Gelenkbeschlag nach Anspruch 3, dadurch gekennzeichnet, dass der Verdrehwinkel zwischen der ersten Aussenverzahnung (8a′) und der zweiten Aussenverzahnung (8b′) über Anschläge begrenzt ist.

5. Gelenkbeschlag nach Anspruch 4, dadurch gekennzeichnet, dass die Anschläge der zweiten Aussenverzahnung (8c) von einer bogenförmigen Nut (8g) gebildet sind und dass als damit zusammenwirkender Anschlag der ersten Aussenverzahnung (8a′) am zweiten Gelenkteil (8′) ein Zapfen (8f) vorgesehen ist, der die Nut (8g) der zweiten Aussenverzahnung (8c) durchsetzt.

6. Gelenkbeschlag nach Anspruch 4 oder 5, dadurch gekennzeichnet, dass zwischen den zusammenwirkenden Anschlägen der beiden Aussenverzahnungen (8a′ und 8b′) elastische Elemente (8i) vorgesehen sind.

**Claims**

1. Joint fitting for seats with an adjustable back, especially motor-vehicle seats, in which a fixed joint part (8) assigned to the seat (12) and a pivotable joint part (6) assigned to the back are connected to one another via a pivot pin (7) with a cam (7a), a first joint part (6) of the joint parts (6, 8) having an internal toothing (6a), on which runs an external toothing (8a) belonging to the second joint part (8) and forming part of a swashplate mechanism, characterized in that concentric relative to the internal toothing (6a) of the first joint part (6) there is a second internal toothing (6b) of smaller diameter, which is offset in the axial direction and which is engaged with a second external toothing (8b) of the second joint part (8) which is arranged concentrically relative to the external toothing (8a) and is likewise of smaller diameter and which is offset in the same axial direction, the pitch angles of the two toothings (8a; 8b; 6a; 6b) of each joint part (8; 8'; 6) being respectively the same.

2. Joint fitting according to Claim 1, characterized in that the second external toothing (8b') is connected rotatably to the first external toothing (8a').

3. Joint fitting according to Claims 1 and 2, characterized in that the second external toothing (8b') is mounted on a concentric extension (8d) in the centre of the first external toothing (8).

4. Joint fitting according to Claim 3, characterized in that the angle of rotation between the first external toothing (8a') and the second external toothing (8b') is limited by means of stops.

5. Joint fitting according to Claim 4, characterized in that the stops of the second external toothing (8c) are formed by an arcuate slot (8g), and in that as a stop interacting with this and intended for the first external toothing (8a') there is, on the second joint part (8'), a stud (8f) which passes through the slot (8g) of the second external toothing (8c).

6. Joint fitting according to Claim 4 or 5, characterized in that elastic elements (8i) are provided between the interacting stops of the two external toothings (8a', 8b').

**Revendications**

1. Ferrure articulée pour sièges à dossier réglable, en particulier pour sièges de véhicules automobiles, constituée de manière telle qu'une pièce articulée fixe (8) correspondante au siège (12) et qu'une pièce articulée pivotante (6) correspondante au dossier sont reliées l'une à l'autre par un pivot (7) avec excentrique (7a), l'une (6) des pièces articulées (6, 8) présentant un engrenage intérieur (6a) sur lequel se déplace un engrenage extérieur (8a) de la seconde pièce articulée (8), engrenage extérieur qui constitue l'une des pièces d'un mécanisme oscillant, caractérisée en ce qu'un second engrenage intérieur (6b) qui est concentrique par rapport à l'engrenage intérieur (6a) de la première pièce articulée (6), de diamètre inférieur et décalé dans le sens axial, est prévu, engrenage intérieur (6b) qui est en prise avec un second engrenage extérieur (8b) de la seconde pièce articulée (8), placé de manière concentrique par rapport à l'engrenage extérieur (8a), également de diamètre inférieur et décalé dans le même sens axial, les pas angulaires des deux engrenages (8a; 8b; 6a; 6b) d'une même pièce articulée (8; 8'; 6) étant respectivement égaux.

2. Ferrure articulée selon la revendication 1, caractérisée en ce que le deuxième engrenage extérieur (8b') est relié par torsion au premier engrenage extérieur (8a').

3. Ferrure articulée selon les revendications 1 et 2, caractérisée en ce que le deuxième engrenage extérieur (8b') est logé sur une embase concentrique (8d) au centre du premier engrenage extérieur (8).

4. Ferrure articulée selon la revendication 3, caractérisée en ce que l'angle de torsion entre le premier engrenage extérieur (8a') et le second engrenage extérieur (8b') est limité par des butées.

5. Ferrure articulée selon la revendication 4, caractérisée en ce que les butées du second engrenage extérieur (8c) sont formées par une rainure cintrée (8g) et qu'un tourillon (8f), qui traverse la rainure (8g) du second engrenage extérieur (8c), est prévu comme butée concourante du premier engrenage extérieur (8a') sur la seconde pièce articulée (8').

6. Ferrure articulée selon l'une des revendications 4 ou 5, caractérisée en ce que des éléments élastiques (8i) sont prévus entre les butées concourantes de deux engrenages extérieurs (8a' et 8b').

FIG.1

FIG.2

FIG.3

FIG.4

6

6a

6b

6c

V

IV

IV

6

6a

6c

6b

FIG.5

VI

8a

8b

8h

VII

8

FIG.6

8a

8h

8b

8

L

VI

FIG.7

IX

8i

8f

8g

8h'

8i          8f

8g

8'

FIG.8

8a'

8b'

8f

8g

8c

8h'

8d

8f

8e

8'

FIG. 9

11